# EUROPEAN PATENT SPECIFICATION

(11) **EP 4 002 281 B1**
(45) Date of publication and mention of the grant of the patent: **11.02.2026**
(21) Application number: 20839629.1
(22) Date of filing: 08.07.2020
(51) Int. Cl.: G06T 11/60, G09G 5/36, G09G 5/377

(54) **LAYER COMPOSITION METHOD AND APPARATUS, ELECTRONIC DEVICE, AND STORAGE MEDIUM**
VERFAHREN UND GERÄT ZUR SCHICHTZUSAMMENSETZUNG, ELEKTRONISCHE VORRICHTUNG UND SPEICHERMEDIUM
PROCÉDÉ ET APPAREIL DE COMPOSITION DE COUCHES, DISPOSITIF ÉLECTRONIQUE ET SUPPORT D'INFORMATIONS

(30) Priority: 17.07.2019 CN 201910647561
(43) Date of publication of application: 25.05.2022
(73) Proprietor: GUANGDONG OPPO MOBILE TELECOMMUNICATIONS CORP., LTD., Dongguan, Guangdong 523860 (CN)
(72) Inventor: HU, Jie, Dongguan, Guangdong 523860 (CN)
(74) Representative: Taor, Simon Edward William
(86) International application number: PCT/CN2020/100852
(87) International publication number: WO 2021/008418

(56) References cited:
- CN-A- 103 839 533
- CN-A- 105 741 819
- CN-A- 110 363 831
- US-A1- 2017 316 541
- US-A1- 2018 189 922
- US-A1- 2018 189 922
- US-A1- 2019 130 875
- US-B1- 10 257 487

## Description

### BACKGROUND OF DISCLOSURE

### Field of the Disclosure

This application relates to the technical field of image processing, and more specifically to a layer composition method, electronic device, and storage medium.

### Description of the Related Art

With the development of electronic technology, there are more and more electronic devices (such as mobile phones or tablet computers) with image display functions. A display interface of the electronic device usually has multiple display layers that are composited to be displayed on an electronic device. For example, US2017/316541A1 discloses that an electronic device includes a first graphic composer that composes first graphic data associated with a layer of a first composition type, a second graphic composer that composes second graphic data associated with a layer of a second composition type different from the first composition type; US2018/189922A1 discloses that device performance and battery life may be further increased by identifying those layer(s) that do not change frame-to-frame and excluding those layer(s) from composition; US2019/130875A1 discloses that a resolution of the multiple layers is the same as a resolution of the display screen, and resolution of the layer may be higher than resolution of a display screen if a layer of an application program needs relatively high resolution. However, when the electronic device composites the layers, power consumption is high.

### SUMMARY

In view of the above-mentioned problems, the present disclosure provides a layer composition method, electronic device, and storage medium.

The invention is set out in the appended set of claims.

### BRIEF DESCRIPTION OF DRAWINGS

To explain the technical solutions in the embodiments of the present disclosure more clearly, the drawings needed in the description of the embodiments will be briefly introduced as follows. Obviously, the drawings in the following description are only some embodiments of the present disclosure. For those skilled in the art, other drawings can be obtained based on these drawings without creative work.
FIG. 1 shows a logical framework diagram of image processing provided by an embodiment of the present disclosure.
FIG. 2 shows a schematic diagram of a display interface provided by an embodiment of the present disclosure.
FIG. 3 shows a schematic diagram of layers corresponding to the display interface shown in FIG. 2.
FIG. 4 shows a flow chart of a layer composition method provided by an embodiment of the present disclosure.
FIG. 5 shows another flow chart of a layer composition method provided by an embodiment of the present disclosure.
FIG. 6 shows still another flowchart of a layer composition method provided by an embodiment of the present disclosure.
FIG. 7 shows a functional block diagram of a layer composition apparatus (which is marked as not being part of the present invention) provided by an embodiment of the present disclosure.
FIG. 8 shows a structural block diagram of an electronic device provided by an embodiment of the present disclosure.
FIG. 9 is a storage medium for storing or carrying program codes for implementing a layer composition method according to an embodiment of the present disclosure.

### DETAILED DESCRIPTION OF EMBODIMENTS

In order to enable those skilled in the art to better understand the solutions of the present disclosure, the technical solutions in the embodiments of the present disclosure will be described clearly and completely in conjunction with the accompanying drawings in the embodiments of the present disclosure.

An application can create a window through a window manager (WindowsManager), wherein the window manager creates a drawing surface (Surface) for each window to draw various elements that need to be displayed on the drawing surface, and each surface corresponds to one layer, that is, a layer can be drawn on each surface.

A display interface (such as Activity) can include a plurality of layers, such as navigation bar, status bar, program interface, and the like. Each layer is rendered before compositing. Namely, each layer is drawn on a corresponding surface, that is, a corresponding layer is drawn on each surface. Specifically, layer drawing can be performed on a canvas provided by the surface by a hardware accelerated renderer (HWUI) and/or a Skia graphics library.

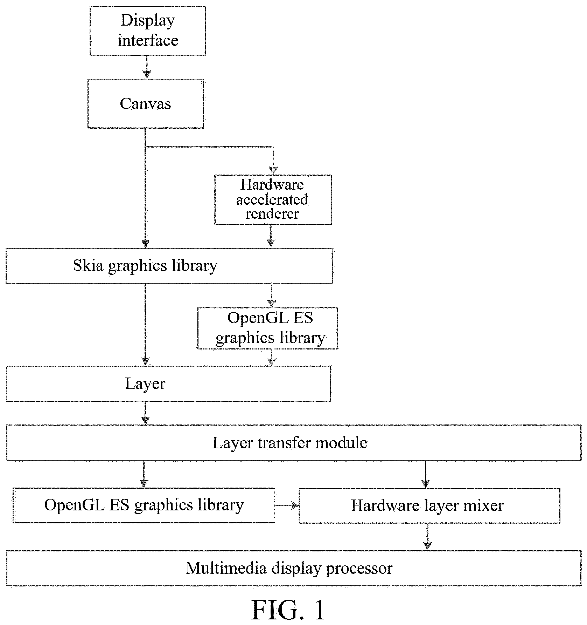

A system then uses a layer transfer module (Surface Flinger) service to composite each surface, that is, each layer is composited. The SurfaceFlinger service runs in a system process and is used to uniformly manage a frame buffer (FrameBuffer) of the system. The SurfaceFlinger acquires all layers, and an image processor (GPU, Graphics Processing Unit, which is also referred to a graphics processor) can be used to composite the layers and store a composition result in the frame buffer. In the embodiment of the present disclosure, the GPU may composite all or a part of the layers. When the GPU composites a part of the layers of a display interface scheduled for displaying (which is also referred to an interface for display), a hardware layer mixer (HWC, Hardware composer) can composite a result of SurfaceFlinger composited by the GPU with other layers. Specifically, as shown in FIG. 1, the HWC can call a multimedia display processor (MDP, Multimedia Display Processor) to composite layers obtained after being composited by the GPU in the frame buffer and other uncomposited layers. Finally, a buffer in a buffer queue (BufferQueue) is formed, and under the action of the display driver, and an image composited in the buffer is then used for displaying.

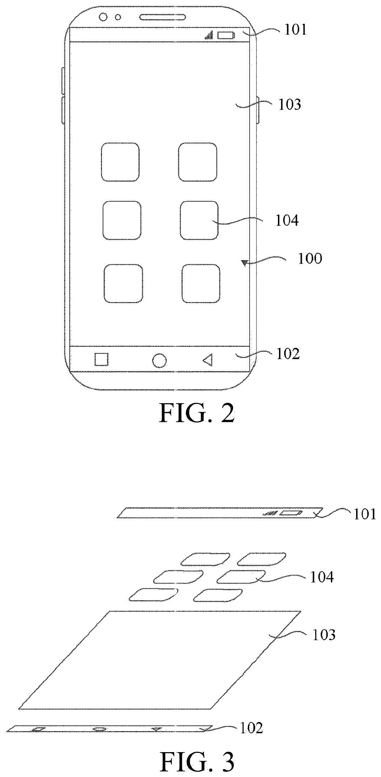

In other words, a display screen of an electronic device can display a display interface, wherein the display interface may include a plurality of layers, that is, the display interface is composited of a plurality of layers. Each layer consists of many pixels, and each layer is superimposed to form the entire image to form the display interface of the electronic device. The layer can accurately locate elements on a page, wherein text, pictures, tables, and plug-ins can be added into the layer, and the layer can also nest other layers inside. For layers and images composited by layers, it can be generally understood that layers are like films containing elements such as text or graphics. Layers stacked in a specified order to form a final image effect is an image formed by combining layers, such as a display interface of an electronic device. Certainly, it is understandable that the layers are not real films, and the above description is just a metaphor for easy understanding. For example, a desktop display interface 100 of an electronic device shown in FIG. 2 includes a plurality of layers, which are a status bar 101, a navigation bar 102, a wallpaper 103, and an icon layer 104.

In order to display the display interface on a display screen, it is necessary to composite the various layers of the display interface. For example, the status bar 101, the navigation bar 102, the wallpaper 103, and the icon layer 104, as shown in FIG. 3, are composited into the display interface 100 shown in FIG. 2. The inventor found that because the GPU is a general-purpose graphics processor, it is more powerful than the MDP in graphics processing. In addition to 2D image processing, 3D image processing, special effects, and the like can also be performed, and the plurality of layers can be superimposed at once. When the GPU only uses a commonly used layer composition method for layer composition, the number of layers that can be composited is basically unlimited, but power consumption is relatively high.

The MDP is a dedicated display image processing unit that can perform conventional 2-dimensional image processing and is mainly used for the composition and superimposition of plurality of layers with low power consumption. However, the number of layers that the MDP can composite at once is limited. Specifically, the number of layers composited by the MDP performance at once corresponds to the number of FIFO pipelines in the MDP. Layers that the MDP can superimpose at once are more, and FIFO pipelines that are needed inside are more. The FIFO pipelines are relatively expensive circuits. Therefore, the layers that the MDP can composite are more, and the cost is higher. In some manufacturers' high-end platforms, the MDP has only eight FIFO pipelines at most, which can composite and superimpose up to eight layers at once. On low-end platforms, one MDP may only have four FIFO pipelines, in which only four layers can be superimposed at once. Therefore, if only the MDP is used to composite layers, because the number of layers that the MDP can composite at once is limited, the MDP cannot handle some display interfaces with many layers to be displayed or needs to be composited many times, which affects the composition speed. Therefore, the inventor proposes the layer composition method, apparatus (which is marked as not being part of the present invention), electronic device, and storage medium of the embodiments of the present disclosure to perform layer composition by the cooperation of the GPU and the MDP, which overcomes the limitation of the MDP on the number of composite layers and reduces the power consumption as much as possible. The layer with a relatively large number of bits is composited by the MDP, which has lower power consumption than the GPU for composition. Because of a limited number of layers that the MDP can composite at once, other layers with a relatively small number of bits are composited by the GPU to achieve the lowest possible power consumption during a layer composition process. The layer composition method of the embodiment of the present disclosure will be described in detail below.

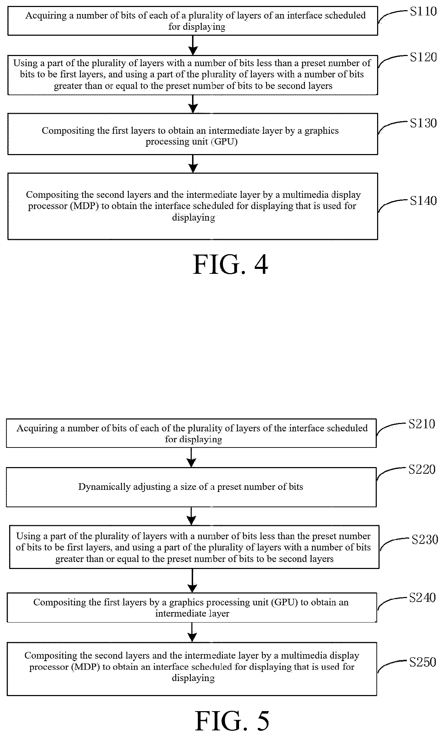

FIG. 4 shows a flowchart of a layer composition method provided by an embodiment of the present disclosure, and the layer composition method is applied to an electronic device. Specifically, the layer composition method includes:

Step S110: acquiring a total number of bits in each of a plurality of layers of an interface scheduled for displaying.

During a display process of the electronic device, the display interface is displayed on a display screen. The display interface displayed on the display screen is used as the interface scheduled for displaying that includes a plurality of layers. The number of bits in each layer is different. If the number of bits is larger, the power consumption during the layer composition process is higher. In order to reduce the power consumption of the electronic device for layer composition as much as possible, the layers can be divided into two types of layers by the number of bits. One type of layers with a larger number of bits is composited by the MDP, so that the power consumption during the layer composition process is as low as possible; the other type of layers with a smaller number of bits is composited by the GPU to overcome an existence of the limited number of the composition of the MDP, and increase the composition speed.

Therefore, the number of bits in each layer in the interface scheduled for displaying can be acquired. The number of bits of the layer indicates a data size of the layer or how much storage capacities that the layer requires, such as 16 bits, 32 bits, and the like. Certainly, the embodiment of the present disclosure may also use the number of bytes or other representation methods to indicate the data size of the layer. If the data is larger, and the corresponding bit is larger. The embodiment of the present disclosure takes the number of bits as an example for description.

In the embodiment of the present disclosure, a manner of acquiring the size of the number of bits of the layer is not limited in the embodiment of the present disclosure. For example, in one embodiment, the number of pixels of the layer can be read, and according to the number of bits occupied by each pixel, the number of bits of the layer can be calculated by multiplying the number of pixels by the number of bits occupied by each pixel.

For another example, in another implementation, a layer includes one or more elements. A sum of the number of bits of various elements in each layer can be acquired as the number of bits of the layer. The element in the layer is data that is used to display and needs to occupy storage space for the layer, such as text, pictures, and the like. For example, if a layer is used to display a picture, the element in the layer is the picture, and the number of bits of the layer is the number of bits of the picture. For example, as shown in FIG. 2, the number of bits of the icon layer 104 is a sum of the bits of each icon. For another example, if a layer is used to display text, the element in the layer is the text displayed in the layer, and the number of bits of the layer can be a sum of the number of bits of the text in the layer.

In the implementation, a manner of calculating the number of bits of various elements in the layer is not limited. For example, it may be that, for any element, calculating a size of each element according to a number of smallest constituent units of the element and a number of bits occupied by each smallest constituent unit; alternatively, in the relevant data of an element, number information of bits of the element is stored, the number information of bits can be directly read to determine the number of bits of the element. For example, if the element in the layer includes a picture, a method for calculating the number of bits in the picture may be reading the number of pixels in the picture, and according to the number of bits occupied by each pixel, and calculating the number of bits of the picture by multiplying the number of pixels by the number of bits occupied by each pixel; alternatively, it may be storing information regarding the number of bits of the picture in data information of the picture, and directly reading the information regarding the number of bits to obtain the number of bits of the picture.

Step S120: using a part of the plurality of layers with a number of bits less than a preset number of bits (which is also referred to a preset number) to be first layers, and using a part of the plurality of layers with a number of bits greater than or equal to the preset number of bits to be second layers.

The number of bits in each layer is compared with the preset number of bits, wherein the a part of the plurality of layers with the number of bits less than the preset number of bits are used to be the first layers, and the a part of the plurality of layers with the number of bits greater than or equal to the preset number of bits are used to be the second layers.

A specific value of the preset number of bits is not limited in the embodiment of the present disclosure and can be set according to actual requirements. For example, the value of the preset number of bits can be set according to the number of layers and the number of bits normally composited by the electronic device, so that the number of layers greater than the preset number of bits is less than or equal to the maximum number of layers composited by the MDP at once.

Step S130: compositing the first layers to obtain an intermediate layer by a graphics processing unit (GPU).

Step S140: compositing the second layers and the intermediate layer by a multimedia display processor (MDP) to obtain the interface scheduled for displaying that is used for displaying.

The first layers and the second layers are composited by the GPU and the MDP, respectively. Because the composition performed by the MDP is limited to the number of layers, rather than the number of bits of the layer, when the same composition method is used for composition, a layer with a larger number of bits consumes more power than a layer with a smaller number of bits. Therefore, the first layers with the smaller number of bits are composited by the GPU, so that the GPU not only shares a part of the layers for the MDP but also composites with the smaller number of bits to reduce composition power consumption. The second layers with the larger number of bits are composited by the MDP.

All of the layers are composited to obtain a final interface scheduled for displaying that can be realized by the MDP, so that the power consumption during the layer composition of the electronic device is as low as possible. Namely, the GPU composites the first layers and defines a composite result of the first layers as an intermediate layer. The MDP composites the intermediate layer and the second layer. The interface scheduled for displaying is obtained for displaying.

For example, the plurality of layers in the desktop display interface 100 shown in FIG. 2 are the status bar 101, the navigation bar 102, the wallpaper 103, and the icon layer 104. If the number of bits in the status bar 101 and the navigation bar 102 is less than the preset number of bits, and the number of bits of the wallpaper 103 and the icon layer 104 is greater than or equal to the preset number of bits, then the status bar 101 and the navigation bar 102 are used to be the first layers, and the wallpaper 103 and the icon layer 104 are used to be the second layers. The GPU composites the status bar 101 and the navigation bar 102, and the MDP composites a result composited by the GPU, the wallpaper 103, and the icon layer 104 to obtain a final composited interface scheduled for displaying.

Optionally, after the first layers are composited to obtain the intermediate layer, that can be stored in a frame buffer. Suppose all of the layers involved in the intermediate layer are not updated during an update process of the interface scheduled for displaying on a screen. In that case, the intermediate layer in the frame buffer remains unchanged. Thus, the GPU does not need to composite the intermediate layer again, reducing the composition frequency of the GPU. When the display interface is to be refreshed, the MDP can read the intermediate layer in the frame buffer and compose the intermediate layer with the second layer into a final image for displaying. Namely, when the interface scheduled for displaying is updated, the multimedia display processor can read the intermediate layer in the frame buffer, and composite the intermediate layer with other layers of a new interface scheduled for displaying.

Optionally, when the GPU is compositing the first layers, the MDP can composite the second layers at the same time, so that the composition of the first layers and the composition of the second layers can be performed simultaneously, which can reduce the composition power consumption and can improve the composition speed. In the embodiment of the present disclosure, a layer obtained after the MDP composites the second layers may be defined as a layer scheduled for compositing. The MDP composites the layer scheduled for compositing and the intermediate layer to obtain the final interface scheduled for displaying. The intermediate layer may be stored in the frame buffer. After the MDP composites the second layers into the layer scheduled for compositing, the intermediate layer in the frame buffer is read, and the intermediate layer and the layer scheduled for compositing are composited into the interface scheduled for displaying. Alternatively, in the process of the second layers composited by the MDP, if the intermediate layer has been composited, the MDP can read the intermediate layer in the frame buffer and composite the intermediate layer and the second layer together.

In an embodiment of the present disclosure, the layer with the number of bits less than the preset number of bits is composited by the GPU to be the intermediate layer, and the intermediate layer and the layer with the number of bits greater than or equal to the preset number of bits are composited by the MDP to obtain a final result of layer composition for displaying. Thus, by the combination of the MDP and the GPU, the power consumption of the electronic device in the layer composition process is as low as possible.

In a method provided in another embodiment of the present disclosure, a size of the preset number of bits used to determine the first layers and the second layers can also be dynamically adjusted, such that the numbers of the first layers and the second layers is within a reasonable range, which not only enables the MDP and the GPU perform composition together to reduce the power consumption of layer composition but also increases the composition speed. Specifically, please refer to FIG. 5. The method includes:
Step S210: acquiring a total number of bits in each of the plurality of layers of the interface scheduled for displaying.

For this step, references may be made to the corresponding description of the embodiments mentioned above and are not described in detail here again.

Step S220: dynamically adjusting a size of a preset number of bits.

Step S230: using a part of the plurality of layers with a number of bits less than the preset number of bits to be first layers, and using a part of the plurality of layers with a number of bits greater than or equal to the preset number of bits to be second layers.

The preset number of bits is a criterion for dividing the first and second layers. However, different electronic devices have different users who have different usage tendencies, then the architectures of the number of layers and the number of bits in each layer on an interface displayed by the electronic device are different. In addition, watching different content at different times, the number of layers in a display interface may be quite different. For a specific interface scheduled for displaying, if the preset number of bits is set too large or too small, it may cause too many first or second layers, which make exceed the processing capacity of the MDP or too few layers composited by the MDP, affect a layer composition effect. To remain the number of the first layers and the number of the second layers in an appropriate state, the size of the preset number of bits can be dynamically adjusted in the embodiment of the present disclosure.

Specifically, contents browsed by a user within a period may be relatively close, and a total number of bits of the layers between the interfaces scheduled for displaying is relatively close. For example, when the user is watching a video, layers involved in display interfaces may be all of video layers where there are video contents or background layers other than video contents, the numbers of bits between the display interfaces are relatively close, and the numbers of layers involved in the display interfaces are relatively close. Therefore, the preset number of bits can be dynamically adjusted according to a historical display record of the electronic device.

As an implementation, a preset number of bits may be adjusted once at preset intervals, and an adjustment is made according to the numbers of bits in the display interfaces within the preset interval. Specifically, it may be that an average value of the numbers of bits of all layers used for the interface scheduled for displaying within a preset time range before the current time is determined at preset intervals when a screen is in a display state; and the average value is used as the preset number of bits. The number of bits in each layer in each display interface can be recorded. When the average value is determined, the average value is calculated by dividing the total number of bits within the latest preset time range by the total number of layers.

Optionally, in this embodiment, when a new preset number of bits is used as a classification criterion, and a part of the plurality of layers greater than the preset number of bits are used to be second layers, if the number of second layers is greater than or equal to a maximum value of the number of layers that the MDP can process at once, the preset number of bits can be increased stepwise until the number of second layers is smaller than the number of layers that the MDP can process at once when the layers are classified according to the preset number of bits. An adjustment step is not limited to the embodiment of the present disclosure, and it can be a preset smaller value, or it can be the number of bits of the layer with the smallest number of bits within the preset time range. To avoid the preset number of bits adjusted too many at once, causing that the number of second layers is too small, which is insufficient far away from a processing capability of the MDP. The maximum number of layers that the MDP can process at once indicates a composition capability of the MDP.

Because the content displayed on the display screen is relatively close within the preset time range when the display screen is in the display state, the preset numbers of bits as classification criteria are relatively close. A stepwise adjustment of the preset number of bits can only be performed at once after the preset number of bits is set according to the average value, instead of multiple adjustments within the preset time range, to reduce the amount of data processing.

As another implementation, after a layer classification is performed according to a preset number of bits, a value of the preset number of bits can be adjusted due to a difference of the numbers of the first layers and the second layers too large. Specifically, the number of the first layer and the number of the second layer in each interface scheduled for displaying can be recorded; it is determined whether the number of the first layers is greater than the number of the second layers by a preset difference within a preset plurality of continuous interfaces scheduled for displaying.

If the number of the first layers is greater than the number of the second layers by the preset difference within the preset plurality of continuous interfaces scheduled for displaying, it indicates that the number of the first layers is too many, and the number of the second layers is not enough. A value of the preset number of bits can be decreased to increase the number of second layers and decrease the number of first layers during subsequent classifications.

If the preset plurality of continuous interfaces scheduled for displaying do not all satisfy a case that the number of the first layers is greater than the number of the second layers by the preset difference, then further determining whether the preset plurality of continuous interfaces scheduled for displaying all satisfies a case that the number of the second layers is greater than the number of the first layers by the preset difference. If the preset plurality of continuous interfaces scheduled for displaying all satisfies that the number of the second layers is greater than the number of the first layers by the preset difference, it indicates that the number of the second layers is too many, and the number of the first layers is not enough. The value of the preset number of bits can be increased to increase the number of the first layers and decrease the number of the second layers during the subsequent classifications.

If the preset plurality of continuous interfaces scheduled for displaying do not all satisfy the case that the number of the second layers is greater than the number of the first layers by the preset difference, and do not all satisfy the case that the number of the first layers is greater than the number of the second layers by the preset difference, it means that the current preset number of bits is set relatively reasonable, and the value of the preset number of bits can remain unchanged.

In the embodiment of the present disclosure, an execution timing of dynamically adjusting the size of the preset number of bits may not be restricted by an execution sequence of other steps. When layers of the interface scheduled for displaying are divided into the first and second layers according to the preset number of bits, the current preset number of bits is used as the classification criterion. Namely, during classification, if the preset number of bits is adjusted, the adjusted number has been used as the classification criterion; if the preset number of bits has not been adjusted, the unadjusted preset number of bits is used as the classification criterion.

Optionally, in an embodiment of the present disclosure, because the number of layers in the interface scheduled for displaying is generally not too many, thereby that the number of second layers usually does not exceed a composition capability limit of the MDP when the preset number of bits is used as the classification criterion. Assuming that there are too many second layers at a certain time, which exceeds the composition capability of the MDP, the layer with the smallest number of bits exceeding the composition capability of the MDP at that time can be allocated to the GPU for composition. Namely, if the number of second layers exceeds the composition capability of the MDP, the second layer with the smallest number of bits exceeding the composition capability of the MDP is allocated to the GPU as the first layer for the composition performed by the GPU. Alternatively, the MDP performs the composition many times, i.e., a part of the composition is composited and stored by the MDP, and then another part is composited. Then all intermediate composition results are composited.

Step S240: compositing the first layers by a graphics processing unit (GPU) to obtain an intermediate layer.

Step S250: compositing the second layers and the intermediate layer by a multimedia display processor (MDP) to obtain an interface scheduled for displaying that is used for displaying.

For the description of step S240 and step S250, reference may be made to the embodiments mentioned above, which will not be repeated here.

It is understandable that in the embodiment of the present disclosure, considering the limitation of the MDP composition capability, if only the MDP is used for composition, the number of layers composited by the MDP can be less than or equal to the maximum number of layers that the MDP can composite at once. Namely, the number of layers composited by the MDP can be less than or equal to the number of FIFOs of the MDP. If the MDP and the GPU are used for composition at the same time, that is, the MDP not only needs to composite the second layers that are assigned to the MDP but also composite the intermediate layer composited by the GPU and the second layers into the interface scheduled for displaying. Then, the number of the second layers composited by the MDP needs to be less than or equal to a maximum number of layers that can be composited by the MDP at once minus one. Namely, the number of second layers composited by the MDP can be less than or equal to the number of FIFOs of the MDP minus one. In summary, the intermediate layer obtained by the GPU performing composition is also used as a type of layer, occupying the composition capability of the MDP. Namely, when the MDP composites the intermediate layer composited by the GPU into the interface scheduled for displaying, the FIFO pipeline of the MDP is also occupied. The total number of layers that the MDP can composite at once, including the intermediate layer, does not exceed a maximum number of layers that the MDP can composite at once, that is, it does not exceed the number of FIFOs of the MDP.

In the layer composition method provided by the embodiment of the present disclosure, the size of the preset number of bits is dynamically adjusted so that the preset number of bits adapts to the actual usage of the electronic device. The number of the first layers will not be too many caused by the preset number of bits being too large, and the number of second layers will not be too many because the preset number of bits is too small, so that the number of layers to be composited by the GPU and the MDP is reasonable when the GPU and the MDP are combined to perform composition. Thus, the composition speed is faster under the case of saving power consumption.

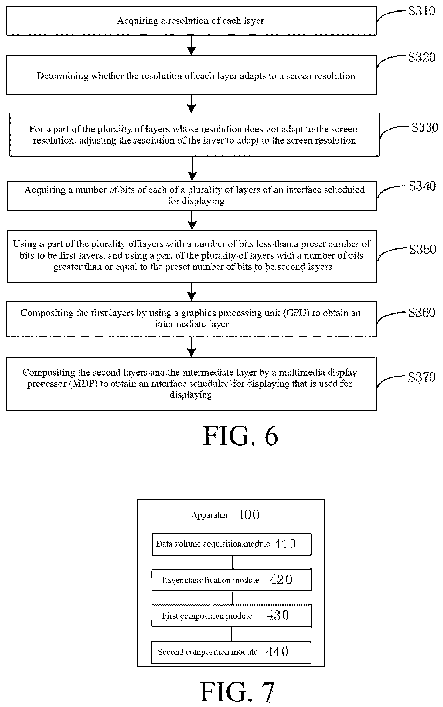

The embodiment of the present disclosure also provides an embodiment. In this embodiment, the layer composition method is applied in a resolution adjustment scene. Specifically, when resolution adjustment is required, the resolution adjustment is performed on layers of the interface scheduled for displaying. Specifically, please refer to FIG. 6, the method includes:
Step S310: acquiring a resolution of each layer.
Step S320: determining whether the resolution of each layer adapts to a screen resolution.
Step S330: for a part of the plurality of layers whose resolution does not adapt to the screen resolution, adjusting the resolution of the layer to adapt to the screen resolution.

A display screen of an electronic device has a corresponding screen resolution, and an image used for displaying on the display screen also has a corresponding image resolution. The screen resolution refers to a number of pixels in horizontal and vertical directions of a screen whose elemental unit is px, wherein 1px = 1 pixel. For example, if the screen resolution is represented by vertical pixels*horizontal pixels, there are 1960 pixels in the vertical direction and 1080 pixels in the horizontal direction, and the screen resolution is 1960*1080. In the embodiments of the present disclosure, for ease of understanding, the representation corresponding to the screen resolution defines an image resolution. Namely, the image resolution is defined as a pixel size of an image, that is, the number of pixels in the horizontal and vertical directions of the image, whose unit is px, wherein 1px = 1 pixel. For example, if the image resolution is represented by vertical pixels*horizontal pixels, there are 1960 pixels in the vertical direction and 1080 pixels in the horizontal direction, and the image resolution is 1960*1080.

If the screen resolution of the electronic device does not adapt to the image resolution of the image, the image will be displayed abnormally. Specifically, an actual physical size of the image that is displayed may be different from an physical size as the image is designed. The physical size of the image is limited by device independent pixels (dp). The screen resolution and image resolution are adapted to remain the dp of the image unchanged. For example, a size of a startup icon is 48x48 dp, regardless of the screen resolution, the startup icon should be 48x48 dp, so that the icon can be adapted to the screen resolution.

Before layers are rendered, the resolution of each layer can be acquired. a method for acquiring the resolutions of the layers may be acquiring relevant description information of pictures in each layer, and obtaining the resolution of each picture from the description information, so as to obtain the resolution of each layer. Each picture is an image.

In addition, the screen resolution can also be acquired. A method for acquiring the screen resolution is not limited to the embodiment of the present disclosure. For example, the screen resolution may be acquired through a window manager, acquired through resource data (Resources), or acquired through a function of acquiring device performance parameters, and the like.

Then, it can be determined whether the resolution of each layer adapts to the screen resolution. Specifically, it can be determined whether the resolution of each element in each layer adapts to the screen resolution. In the embodiment of the present disclosure, a picture is used as an example for description. Whether the picture resolution adapts to the screen resolution, that is, it is determined whether the picture can be displayed in the dp of the picture to be displayed at the current resolution under the screen resolution. In combination with the aforementioned description, a determination process can be, for example, acquiring a dp value of the picture, determining a screen density according to the screen resolution, and determining whether a resolution corresponding to the dp value of the picture at the screen density is consistent with a current actual resolution of the picture, if that is inconsistent, a picture resolution does not adapt to the screen resolution. Optionally, if it is determined whether a text resolution is suitable, the determination can be made according to a scale-independent pixel (sp) of the text.

If there is any resolution of the layer that does not adapt to the screen resolution, adjusting the resolution of the layer. Specifically, if there is a picture in a layer does not adapt to the screen resolution, the picture resolution is adjusted to adapt to the screen resolution. For example, in a desktop display interface 100 shown in FIG. 2, if icons in the icon layer 104 do not adapt a current screen resolution, a resolution of each icon in the icon layer is adjusted to adapt to the screen resolution. The specific adjustment process is not limited to the embodiment of the present disclosure. In combination with the aforementioned description, for example, the actual resolution of the picture may be adjusted to the resolution that the dp value of the picture should achieve under a current screen density.

Optionally, in this embodiment of the present disclosure, before the layers are composited, it may also include acquiring each layer of the interface scheduled for displaying. The acquiring may include rendering the layer (in which the rendering related example is marked as not forming part of the claimed invention).

Optionally, when rendering the layer, each picture in the layer is rendered with an adjusted resolution. If the resolution of the layer adapts to the screen resolution, rendering will be performed at the current resolution (in which the rendering related example is marked as not forming part of the claimed invention).

In addition, there are certain layers whose display content is unchanged on the screen consistent in different display interfaces, for example, a layer corresponding to the navigation bar. The layer whose display content is unchanged on the screen is defined as a fixed layer. The fixed layers can be stored by the electronic device after one rendering (in which the rendering related example is marked as not forming part of the claimed invention). When there are fixed layers in the interface scheduled for displaying, the fixed layers can not be re-rendered, and the rendered fixed layers can be directly read for composition to reduce the image processing time. In other words, if the fixed layers are involved in a plurality of layers of an interface scheduled for displaying, the fixed layers involved in the plurality of layers of the interface scheduled for displaying are used to be a target layer. When the layers need to be composited, a method for acquiring each layer of the interface scheduled for displaying may be reading the target layer among the fixed layers that are stored, and rendering layers other than the target layer among the plurality of layers to obtain the plurality of layers of the interface scheduled for displaying to perform composition (in which the rendering related example is marked as not forming part of the claimed invention).

Optionally, some electronic devices have a resolution adjustment function, that is, the user can adjust a display screen of an electronic device from one screen resolution to another screen resolution, or the electronic device can adjust the display screen from one screen resolution to another screen resolution according to current remaining power. After the screen resolution of the display screen is adjusted, the fixed layers should also be adjusted to adapt to a new screen resolution. Therefore, optionally, in the embodiment of the present disclosure, when it is monitored that the screen resolution has changed, acquiring fixed layers for displaying, and adjusting the resolution of each of the fixed layers to adapt to the screen resolution and saving. A detection of changing in the screen resolution may be a situation that an adjustment operation for a screen resolution is monitored and a resolution adjustment is performed in response to the adjustment operation; alternatively, may be the acquired screen resolution inconsistent with the screen resolution this is previously acquired, or that is detected by other means. In addition, the adjusting the resolution of each of the fixed layers to adapt to the screen resolution and saving may be rendering the fixed layers at a resolution that adapts to the screen resolution and saving the rendered layer (in which the rendering related example is marked as not forming part of the claimed invention).

Therefore, when determining whether the resolution of each layer adapts to the screen resolution, if the layers include the fixed layers, because the resolution of each of the fixed layers has been changed when the screen resolution adjustment is monitored and the rendering is saved (in which the rendering related example is marked as not forming part of the claimed invention), no longer determining whether the resolution of each of the fixed layers adapts to the screen, but determining whether layers other than the fixed layers adapt to the screen resolution. Namely, determining whether layers other than the fixed layers are consistent with the screen resolution, thereby reducing processing time and processing flow. If there is a layer that does not adapt to the screen resolution among layers other than the fixed layers, adjusting the layer, that does not adapt to the screen resolution, to adapt to the screen resolution.

In addition, for electronic devices that can perform a resolution adjustment, if the screen resolution of the electronic device is adjusted, for the same picture, such as an icon in the electronic device, or for pictures with the same resolution, the display effect after the adjustment will change from before the adjustment. If the screen resolution is adjusted to be higher, the same picture or pictures with the same resolution will be displayed to be smaller; if the screen resolution is adjusted to be enlarged, the display of the same picture or pictures with the same resolution will be displayed to be larger. After the screen resolution on the same screen is adjusted, the same picture is displayed to present different display effects, which is not conducive to the development of the user's viewing habits, and brings discomfort to the user's viewing and affects the user's experience. Specifically, if the pixel density of the screen is 160dpi (dots per inch), 1dp = 1px; if the pixel density of the screen is 320dpi, 1dp = 2px; if the pixel density of the screen is 480dpi, 1dp = 3px, and so on. As the pixel density of the screen changes exponentially, the number of pixels corresponding to 1dp changes in corresponding multiples. For the same display, when the screen resolution is increased, increasing the pixel density (dpi, dots per inch) of the screen. Suppose the picture wants to adapt to the screen resolution, remaining the dp of the picture unchanged. In the case of the screen resolution being adapted before adjustment, the pixel size of the picture, i.e., the resolution, should be enlarged by a multiple corresponding to the increase in screen density. For the same display, when the screen resolution is reduced, pixel density (dpi, dots per inch) of the screen is decreased. Suppose the picture wants to adapt to the screen resolution, remaining the dp of the picture unchanged. In the case that the picture resolution adapts to the screen resolution before adjustment, the pixel size of the picture, i.e., the resolution, is reduced by a factor corresponding to the decrease in screen density. Certainly, if the picture resolution does not adapt to the resolution before or after adjustment, the picture resolution is directly adjusted according to the dp of the picture and the current screen density.

Step S340: acquiring a total number of bits in each of a plurality of layers of an interface scheduled for displaying.

Step S350: using a part of the plurality of layers with a number of bits less than a preset number of bits to be first layers, and using a part of the plurality of layers with a number of bits greater than or equal to the preset number of bits to be second layers.

Determining the number of bits in each of the layers of the interface scheduled for displaying.

Optionally, determining the number of bits of the layer may be performed before the layer composition, or performed before the layer rendering, during the layer rendering, or after the layer rendering is finished (in which the rendering related example is marked as not forming part of the claimed invention), which is not limited to the embodiment of the present disclosure. If the determination of the number of bits and the classification of the layers are completed before the rendering of the layer is completed (in which the rendering related example is marked as not forming part of the claimed invention), the processing speed can be improved. The classification of the layer is determining that the layer belongs to the first layers or the second layers according to the number of bits of the layer.

Optionally, the number of bits of the layer can be determined before or after the resolution is adjusted. Suppose the resolution of the layer needs to be adjusted, if the number of bits of the layer is determined before the resolution adjustment, the number of bits of the layer can be determined according to the new resolution after the resolution which the layer needs to be adjusted is determined. A specific method for determining the number of bits of the layer is not limited to the embodiment of the present disclosure. Specifically, reference may be made to the aforementioned description, which will not be repeated here.

Step S360: compositing the first layers by using a graphics processing unit (GPU) to obtain an intermediate layer.

Step S370: compositing the second layers and the intermediate layer by a multimedia display processor (MDP) to obtain an interface scheduled for displaying that is used for displaying.

Compositing the various layers after a resolution adjustment, to obtain the interface scheduled for displaying adapted to a screen for displaying. The specific description can refer to the aforementioned embodiment, which will not be repeated here.

In the embodiment of the present disclosure, the adjustment of the interface scheduled for displaying adapted to the screen is realized by layer-based adjustment. In other words, each layer in the interface scheduled for displaying is adjusted to adapt each layer to the screen resolution, improving the processing effect of resolution adjustment and reducing the time required for resolution adjustment and rendering as much as possible (in which the rendering related example is marked as not forming part of the claimed invention). Then, the adjusted layers are further composited to reduce the power consumption of the electronic device.

The embodiment of the present disclosure also provides a layer composition apparatus 400 (which is marked as not being part of the present invention). Specifically, referring to FIG. 7, the device 400 includes: a bit-number acquisition module 410, which is used to acquire a total number of bits in each of a plurality of layers of an interface scheduled for displaying; a layer classification module 420, which is used to use a part of the plurality of layers with a number of bits less than a preset number to be first layers, and to use a part of the plurality of layers with a number of bits greater than or equal to the preset number of bits to be second layers; a first composition module 430, which is used to composite the first layers to obtain an intermediate layer, by a graphics processing unit (GPU); a second composition module 440, which is used to composite the second layers and the intermediate layer by a multimedia display processor (MDP) to obtain an interface scheduled for displaying that is used for displaying.

Optionally, the apparatus 400 (which is marked as not being part of the present invention) may further include a resolution adjustment module. Specifically, the resolution adjustment module may include a resolution acquisition unit, which is used to acquire a resolution of each layer; an adapting determination unit, which is used to determine whether the resolution of each layer adapts to the screen resolution; an adaptation unit, which is used to adjust the resolution of the layer to adapt to the screen resolution for the layer whose resolution does not adapt to the screen resolution.

Optionally, the resolution adjustment module may further include a layer unit, which is used to acquire fixed layers for displaying when a change of the screen resolution is monitored, wherein the fixed layers mean layers whose display content on the screen does not change. The adaptation unit is also used to adjust the resolution of each of the fixed layers to adapt to the screen resolution and save. The adapting determination unit is used to determine whether layers other than the fixed layers are consistent with the screen resolution if layers involved in the interface scheduled for displaying include the fixed layers.

Optionally, the apparatus 400 (which is marked as not being part of the present invention) may further include a bit-number adjustment module, which is used to dynamically adjust a size of the preset number of bits.

Optionally, the bit-number adjustment module can be used to determine an average value of the numbers of bits of all layers used for the interface scheduled for displaying within a preset time range before the current time at preset intervals when a screen is in a display state; and use the average value as the preset number of bits.

Optionally, the bit-number adjustment module can be used to record a number of the first layers and a number of the second layers in each of interfaces scheduled for displaying; determining whether a preset plurality of continuous interfaces scheduled for displaying all satisfies a case that the number of the first layers is greater than the number of the second layers by a preset difference; if the preset plurality of continuous interfaces scheduled for displaying all satisfies the case that the number of the first layers is greater than the number of the second layers by the preset difference, decreasing a value of the preset number of bits; if the preset plurality of continuous interfaces scheduled for displaying do not all satisfy the case that the number of the first layers is greater than the number of the second layers by the preset difference, determining whether the preset plurality of continuous interfaces scheduled for displaying all satisfies a case that the number of the second layers is greater than the number of the first layers by the preset difference; if the preset plurality of continuous interfaces scheduled for displaying all satisfies the case that the number of the second layers is greater than the number of the first layers by the preset difference, increasing the value of the preset number of bits; if the preset plurality of continuous interfaces scheduled for displaying do not all satisfy the case that the number of the second layers is greater than the number of the first layers by the preset difference, remaining the value of the preset number of bits unchanged.

Optionally, the apparatus (which is marked as not being part of the present invention) may also include a cache module for saving the intermediate layer in the frame buffer. The second composition module 440 may be used for the MDP to composite the plurality of second layers into a layer scheduled for compositing; the MDP reads the intermediate layer in the frame buffer and composites the intermediate layer with the layer scheduled for compositing into the interface scheduled for displaying.

Those skilled in the art can clearly understand that, for the convenience and conciseness of the description, the specific working process of the device and module described above can refer to the corresponding process in the aforementioned method embodiment, which will not be repeated here.

In the several embodiments provided in the present disclosure, the coupling between the modules may be coupling in electrical, mechanical, or other forms.

In addition, each functional module in each embodiment of the present disclosure may be integrated into one processing module, or each module may exist alone physically, or two or more modules may be integrated into one module. The above-mentioned integrated modules can be implemented in the form of hardware or software function modules. Various implementations in the embodiments of the present disclosure may be implemented by corresponding modules, and corresponding descriptions are not repeated in the embodiments of the present disclosure one by one.

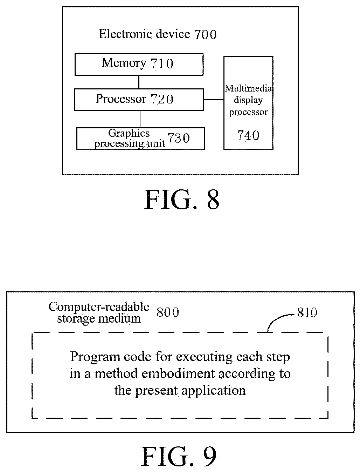

Please refer to FIG. 8, which shows a structural block diagram of an electronic device 700 provided by an embodiment of the present disclosure. The electronic device 700 may be an electronic device such as a mobile phone, a tablet computer, or an e-book. The electronic device 700 includes a memory 710, a processor 720, a GPU 730, and an MDP 740. The memory 710, the GPU 730, and the MDP 740 are coupled to the processor, wherein the memory 710 stores instructions. When the instructions are executed by the processor 720, the processor executes the method described in one or more aforementioned embodiments, wherein the GPU 730 and the MDP 740 correspondingly execute the layer composition process in the method.

The processor 720 may include one or more processing cores. The processor 720 uses various interfaces and wiring to connect various parts in the entire electronic device 700 and performs various functions of the electronic device 700 and process data by running or executing instructions, programs, code sets, or instruction sets stored in the memory 710, and calling data stored in the memory 710. Optionally, the processor 720 may be realized by adopting at least one hardware form of a digital signal processing (DSP), a field-programmable gate array (FPGA), and a programmable logic array (PLA). The processor 720 may be integrated with one or a combination of a central processing unit (CPU), a graphics processing unit (GPU), and a modem. The CPU mainly processes an operating system, a user interface, application programs, and the like; the GPU is used to render and draw display content; the modem is used to process wireless communication. It can be understood that the above-mentioned modem may also not be integrated into the processor 720, but may be implemented by a communication chip alone.

The memory 710 may include a random access memory (RAM), and may also include a read-only memory (Read-Only Memory). The memory 710 may be used to store instructions, programs, codes, code sets, or instruction sets, such as instructions or code sets used to implement the layer composition method provided in the embodiments of the present disclosure. The memory 710 may include a program storage area and a data storage area, wherein the program storage area may store instructions for implementing an operating system, instructions for implementing at least one function, instructions for implementing each of the aforementioned method embodiments, and the like. The data storage area can also be data created by the electronic device in use (such as audio and video data, chat record data), and the like.

Please refer to FIG. 9, which shows a structural block diagram of a computer-readable storage medium provided by an embodiment of the present disclosure. The computer-readable storage medium 800 stores program codes, wherein the program codes can be called by a processor to execute the methods described in the aforementioned method embodiments.

The computer-readable storage medium 800 may be an electronic memory such as a flash memory, an EEPROM (electrically erasable programmable read-only memory), an EPROM, a hard disk, or a ROM. Optionally, the computer-readable storage medium 800 includes a non-transitory computer-readable storage medium. The computer-readable storage medium 800 has a storage space storing a program code 810 for executing any method step in the above-mentioned method. These program codes can be read from or written into one or more computer program products. The program code 810 may be, for example, compressed in a suitable form.

## Claims

1. A layer composition method, implementable by an electronic device (700) comprising a graphics processor (730) and a multimedia display processor (740), wherein the method comprises:
acquiring (S110, S210, S340) a total number of bits in each of a plurality of layers of an interface for display;
determining (S120, S230, S350) each of the plurality of layers with the total number of bits less than a preset number to be one of a plurality of first layers and each of the plurality of layers with the total number of bits greater than or equal to the preset number to be one of a plurality of second layers to classify the plurality of layers;
obtaining (S130, S240, S360), by the graphic processor, an intermediate layer through compositing the plurality of first layers; and
obtaining (S140, S250, S370), by the multimedia display processor, the interface for display through compositing the plurality of second layers and the intermediate layer;
wherein the method further comprises before the acquiring (S110, S210, S340) the total number of bits in each of the plurality layers of the interface for display:
acquiring (S310) a resolution of each of the plurality of layers;
determining (S320) whether the resolution of each of the plurality of layers adapts to a screen resolution; and
adjusting (S330) a resolution which has not adapted to the screen resolution, to adapt to the screen resolution.
wherein the method further comprises:
determining a change of the screen resolution;
in response to detecting that the screen resolution has changed, acquiring each of the plurality of layers having unchanged display content on a screen to be one of fixed layers for display; and
adjusting the resolution of each of the fixed layers to adapt to the screen resolution.
wherein the method further comprises:
dynamically (S220) adjusting the preset number;
wherein the dynamically (S220) adjusting the preset number comprises:
determining whether the screen is in a display state;
in response to the screen being in the display state, at preset intervals, determining an average value of the numbers of bits of all layers configured for the interface for display within a preset time range before current time; and
setting the average value as the preset number;
or
wherein the dynamically (S220) adjusting the preset number comprises:
recording a number of the plurality of first layers and a number of the plurality of second layers, in each interface for display;
determining whether a preset plurality of continuous interfaces all satisfies a case that the number of the plurality of first layers is greater than the number of the plurality of second layers by a preset difference; and
in response to the preset plurality of continuous interfaces all satisfying the case that the number of the plurality of first layers is greater than the number of the plurality of second layers by the preset difference, decreasing a value of the preset number.

2. The method as claimed in claim 1, wherein the method further comprises: in response to the preset plurality of continuous interfaces not all satisfying the case that the number of the plurality of first layers is greater than the number of the plurality of second layers by the preset difference, determining whether each of the preset plurality of continuous interfaces satisfies a case that the number of the plurality of second layers is greater than the number of the plurality of first layers by the preset difference; and
in response to the preset plurality of continuous interfaces all satisfying the case that the number of the plurality of second layers is greater than the number of the plurality of first layers by the preset difference, increasing the value of the preset number.

3. The method as claimed in claim 2, wherein the method further comprises:
in response to the preset plurality of continuous interfaces not all satisfying the case that the number of the plurality of second layers is greater than the number of the plurality of first layers by the preset difference, and the preset plurality of continuous interfaces not all satisfying the case that the number of the plurality of first layers is greater than the number of the plurality of second layers by the preset difference, remaining the value of the preset number unchanged.

4. The method as claimed in any one of claims 1 to 3, wherein in response to the number of the plurality of second layers being greater than a composition capability of the multimedia display processor, increasing the value of preset number in a step-wise manner until the number of the plurality of second layers is less than the composition capability of the multimedia display processor when the plurality of layers are classified according to the preset number.

5. The method as claimed in any one of claims 1 to 4, wherein the acquiring (S110, S210, S340) the total number of bits in each of the plurality of layers of the interface for display comprises:
reading a number of pixels of each of the plurality of layers; and
according to a number of bits occupied by each pixel, calculating the total number of bits in each of the plurality of layers by multiplying the number of pixels by the number of bits occupied by each pixel.

6. The method as claimed in any one of claims 1 to 5, wherein the acquiring (S110, S210, S340) the total number of bits in each of the plurality of layers of the interface for display comprises:
acquiring a sum of a number of bits of various elements in each layer as the number of bits of the layer, wherein each of the elements in the layer is data that is configured to display and needs to occupy a storage space.

7. The method as claimed in any one of claims 1 to 6, wherein the method further comprises:
storing the intermediate layer to a frame buffer;
wherein the obtaining (S140, S250, S370), by the multimedia display processor, the interface for display through compositing the plurality of second layers and the intermediate layer comprises:
compositing, by the multimedia display processor, the plurality of second layers into a layer scheduled for compositing; and
reading the intermediate layer in the frame buffer, and compositing the intermediate layer and the layer scheduled for compositing into the interface for display, by the multimedia display processor;
or
wherein the method further comprises:
storing the intermediate layer to the frame buffer;
in response to updating the interface for display and all layers involved in the intermediate layer being not updated, obtaining, by the multimedia display processor, the intermediate layer in the frame buffer; and
obtaining the interface through compositing the intermediate layer and the updated interface for display.

8. The method as claimed in any one of claims 4 to 7, wherein, before the obtaining (S130, S240, S360), by the graphics processor, the intermediate layer through compositing the plurality of first layers, the method further comprises:
in response to the number of the plurality of second layers being greater than the composition capability of the multimedia display processor, using one of the plurality of second layers that has the smallest total number of bits and exceeds the composition capability of the multimedia display processor to be one of the plurality of first layers for the graphics processor to perform composition; or
before the obtaining (S130, S240, S360), by the graphics processor, the intermediate layer through compositing the plurality of first layers, the method further comprises: acquiring each layer of the interface for display.

9. An electronic device (700), wherein the electronic device (700) comprises a memory (710), a first processor (720), a graphics processor (730), and a multimedia display processor (740), wherein the memory (710), the graphics processor (730), and the multimedia display processor (740) are coupled to the first processor (720), and the memory (710) stores instructions, when the instructions are executed by the first processor (720), the first processor (720) executes the method as claimed in any one of claims 1 to 8, wherein the graphics processor (730) and the multimedia display processor (740) executes layer composition as claimed in claim 1 to 8.

10. A computer-readable storage medium (800), wherein the computer-readable storage medium (800) stores a program code (810) to execute the method as claimed in any one of claims 1 to 8 when executed on the electronic device of claim 9.

## Patentansprüche

1. Schichtzusammensetzungsverfahren, das von einer elektronischen Vorrichtung (700) implementiert werden kann, die einen Grafikprozessor (730) und einen Multimedia-Anzeigeprozessor (740) umfasst, wobei das Verfahren Folgendes umfasst:
Erfassen (S110, S210, S340) einer Gesamtanzahl von Bits in jeder einer Vielzahl von Schichten einer Anzeigeoberfläche;
Bestimmen (S120, S230, S350) jeder der Vielzahl von Schichten mit der Gesamtanzahl von Bits kleiner als eine vorgegebene Anzahl als eine einer Vielzahl von ersten Schichten und jeder der Vielzahl von Schichten mit einer Gesamtanzahl von Bits größer oder gleich der vorgegebenen Anzahl als eine einer Vielzahl von zweiten Schichten, um die Vielzahl von Schichten zu klassifizieren;
Erhalten (S130, S240, S360), durch den Grafikprozessor, einer Zwischenschicht durch Zusammensetzen der Vielzahl von ersten Schichten; und
Erhalten (S140, S250, S370), durch den Multimedia-Anzeigeprozessor, der Anzeigeoberfläche durch Zusammensetzen der Vielzahl von zweiten Schichten und der Zwischenschicht;
wobei das Verfahren weiter vor dem Erfassen (S110, S210, S340) der Gesamtanzahl von Bits in jeder der Vielzahl von Schichten der Anzeigeoberfläche Folgendes umfasst:
Erfassen (S310) einer Auflösung jeder der Vielzahl von Schichten;
Bestimmen (S320), ob die Auflösung jeder der Vielzahl von Schichten an eine Bildschirmauflösung angepasst ist; und
Einstellen (S330) einer Auflösung, die sich nicht an die Bildschirmauflösung angepasst hat, um sie an die Bildschirmauflösung anzupassen.
wobei das Verfahren weiter Folgendes umfasst:
Bestimmen einer Änderung der Bildschirmauflösung;
als Reaktion auf Detektieren, dass sich die Bildschirmauflösung geändert hat, Erfassen jeder der Vielzahl von Schichten, die unveränderten Anzeigeinhalt auf einem Bildschirm aufweisen, als eine von festen Anzeigeschichten; und
Anpassen der Auflösung jeder der festen Schichten, um sie an die Bildschirmauflösung anzupassen;
wobei das Verfahren weiter Folgendes umfasst:
dynamisches (S220) Anpassen der vorgegebenen Anzahl;
wobei das dynamische (S220) Anpassen der vorgegebenen Anzahl Folgendes umfasst:
Bestimmen, ob sich der Bildschirm in einem Anzeigezustand befindet;
als Reaktion darauf, dass sich der Bildschirm im Anzeigezustand befindet, Bestimmen, bei vorgegebenen Intervallen, eines Durchschnittswerts der Anzahl von Bits aller Schichten, die für die Anzeigeoberfläche innerhalb einer vorgegebenen Zeitspanne vor einem aktuellen Zeitpunkt konfiguriert sind; und
Einstellen des Durchschnittswerts als die vorgegebene Anzahl;
oder
wobei das dynamische (S220) Anpassen der vorgegebenen Anzahl Folgendes umfasst:
Aufzeichnen einer Anzahl der Vielzahl von ersten Schichten und einer Anzahl der Vielzahl von zweiten Schichten in jeder Anzeigeoberfläche;
Bestimmen, ob alle einer vorgegebenen Vielzahl von durchgehenden Oberflächen eine Bedingung erfüllen, dass die Anzahl der Vielzahl von ersten Schichten um eine vorgegebene Differenz größer als die Anzahl der Vielzahl von zweiten Schichten ist; und
als Reaktion darauf, dass alle der vorgegebenen Vielzahl von durchgehenden Oberflächen die Bedingung erfüllen, dass die Anzahl der Vielzahl von ersten Schichten um die vorgegebene Differenz größer als die Anzahl der Vielzahl von zweiten Schichten ist, Verringern eines Werts der vorgegebenen Anzahl.

2. Verfahren nach Anspruch 1, wobei das Verfahren weiter Folgendes umfasst: als Reaktion darauf, dass nicht alle der vorgegebenen Vielzahl von durchgehenden Oberflächen die Bedingung erfüllen, dass die Anzahl der Vielzahl von ersten Schichten um die vorgegebene Differenz größer als die Anzahl der Vielzahl von zweiten Schichten ist, Bestimmen, ob jede der vorgegebenen Vielzahl von durchgehenden Oberflächen eine Bedingung erfüllen, dass die Anzahl der Vielzahl von zweiten Schichten um die vorgegebene Differenz größer als die Anzahl der Vielzahl von ersten Schichten ist; und
als Reaktion darauf, dass alle der vorgegebenen Vielzahl von durchgehenden Oberflächen die Bedingung erfüllen, dass die Anzahl der Vielzahl von zweiten Schichten um die vorgegebene Differenz größer als die Anzahl der Vielzahl von ersten Schichten ist, Erhöhen des Werts der vorgegebenen Anzahl.

3. Verfahren nach Anspruch 2, wobei das Verfahren weiter Folgendes umfasst:
als Reaktion darauf, dass nicht alle der vorgegebenen Vielzahl von durchgehenden Oberflächen die Bedingung erfüllen, dass die Anzahl der Vielzahl von zweiten Schichten um die vorgegebene Differenz größer als die Anzahl der Vielzahl von ersten Schichten ist und nicht alle die vorgegebene Vielzahl von durchgehenden Oberflächen die Bedingung erfüllen, dass die Anzahl der Vielzahl von ersten Schichten um die vorgegebene Differenz größer als die Anzahl der Vielzahl von zweiten Schichten ist, Beibehalten des Werts der vorgegebenen Anzahl als unverändert.

4. Verfahren nach einem der Ansprüche 1 bis 3, wobei als Reaktion darauf, dass die Anzahl der Vielzahl von zweiten Schichten größer als eine Zusammensetzungskapazität des Multimedia-Anzeigeprozessors ist, der Wert der vorgegebenen Anzahl schrittweise erhöht wird, bis die Anzahl der Vielzahl von zweiten Schichten kleiner als die Zusammensetzungskapazität des Multimedia-Anzeigeprozessors ist, wenn die Vielzahl von Schichten gemäß der vorgegebenen Anzahl klassifiziert werden.

5. Verfahren nach einem der Ansprüche 1 bis 4, wobei das Erfassen (S110, S210, S340) der Gesamtanzahl von Bits in jeder der Vielzahl von Schichten der Anzeigeoberfläche Folgendes umfasst:
Auslesen einer Anzahl von Pixeln jeder der Vielzahl von Schichten; und
gemäß einer Anzahl von Bits, die von jedem Pixel belegt werden, Berechnen der Gesamtanzahl von Bits in jeder der Vielzahl von Schichten, indem die Anzahl von Pixel mit der Anzahl von Bits, die von jedem Pixel belegt werden, multipliziert wird.

6. Verfahren nach einem der Ansprüche 1 bis 5, wobei das Erfassen (S110, S210, S340) der Gesamtanzahl von Bits in jeder der Vielzahl von Schichten der Anzeigeoberfläche Folgendes umfasst:
Erfassen einer Summe einer Anzahl von Bits verschiedener Elemente in jeder Schicht als die Anzahl von Bits der Schicht, wobei jedes der Elemente in der Schicht Daten sind, die zur Anzeige konfiguriert sind und Speicherplatz zum Belegen benötigen.

7. Verfahren nach einem der Ansprüche 1 bis 6, wobei das Verfahren weiter Folgendes umfasst:
Speichern der Zwischenschicht in einem Framepuffer;
wobei das Erhalten (S140, S250, S370), durch den Multimedia-Anzeigeprozessor, der Anzeigeoberfläche durch Zusammensetzen der Vielzahl von zweiten Schichten und der Zwischenschicht Folgendes umfasst;
Zusammensetzen, durch den Multimedia-Anzeigeprozessor, der Vielzahl von zweiten Schichten zu einer Schicht, die dazu vorgesehen ist, zusammengesetzt zu werden; und
Auslesen der Zwischenschicht im Framepuffer und Zusammensetzen der Zwischenschicht und der Schicht, die dazu vorgesehen ist, zusammengesetzt zu werden, zu der Anzeigeoberfläche, durch den Multimedia-Anzeigeprozessor;
oder
wobei das Verfahren weiter Folgendes umfasst:
Speichern der Zwischenschicht im Framepuffer;
als Reaktion darauf, dass die Anzeigeoberfläche aktualisiert wird und alle beteiligten Schichten in der Zwischenschicht nicht aktualisiert werden, Erhalten, durch den Multimedia-Anzeigeprozessor, der Zwischenschicht im Framepuffer; und
Erhalten der Oberfläche durch Zusammensetzen der Zwischenschicht und der aktualisierten Anzeigeoberfläche.

8. Verfahren nach einem der Ansprüche 4 bis 7, wobei vor dem Erhalten (S130, S240, S360), durch den Grafikprozessor, der Zwischenschicht durch Zusammensetzen der Vielzahl von ersten Schichten, das Verfahren weiter Folgendes umfasst:
als Reaktion darauf, dass die Anzahl der Vielzahl von zweiten Schichten größer als die Zusammensetzungsfähigkeit des Multimedia-Anzeigeprozessors ist, Verwenden einer der Vielzahl von zweiten Schichten, die die geringste Gesamtanzahl von Bits aufweist und die Zusammensetzungsfähigkeit des Multimedia-Anzeigeprozessors übersteigt, als eine der Vielzahl von ersten Schichten für den Grafikprozessor, um eine Zusammensetzung durchzuführen; oder
vor dem Erhalten (S130, S240, S360), durch den Grafikprozessor, der Zwischenschicht durch Zusammensetzen der Vielzahl von ersten Schichten, das Verfahren weiter Folgendes umfasst: Erfassen jeder Schicht der Anzeigeoberfläche.

9. Elektronische Vorrichtung (700), wobei die elektronische Vorrichtung (700) einen Speicher (710), einen ersten Prozessor (720), einen Grafikprozessor (730) und einen Multimedia-Anzeigeprozessor (740) umfasst, wobei der Speicher (710), der Grafikprozessor (730) und der Multimedia-Anzeigeprozessor (740) mit dem ersten Prozessor (720) gekoppelt sind und der Speicher (710) Anweisungen speichert, wobei, wenn die Anweisungen vom ersten Prozessor (720) ausgeführt werden, der erste Prozessor (720) das Verfahren nach einem der Ansprüche 1 bis 8 ausführt, wobei der Grafikprozessor (730) und der Multimedia-Anzeigeprozessor (740) eine Schichtzusammensetzung nach Anspruch 1 bis 8 ausführen.

10. Computerlesbares Speichermedium (800), wobei das computerlesbare Speichermedium (800) einen Programmcode (810) speichert, um das Verfahren nach einem der Ansprüche 1 bis 8 auszuführen, wenn er auf der elektronischen Vorrichtung nach Anspruch 9 ausgeführt wird.

## Revendications

1. Procédé de composition de couches, pouvant être mis en œuvre par un dispositif électronique (700) comprenant un processeur graphique (730) et un processeur d'affichage multimédia (740), dans lequel le procédé comprend :
l'acquisition (S110, 5210, S340) d'un nombre total de bits dans chaque couche d'une pluralité de couches d'une interface d'affichage ;
la détermination (S120, S230, S350) de chaque couche de la pluralité de couches dont le nombre total de bits est inférieur à un nombre prédéfini comme étant une couche d'une pluralité de premières couches et de chaque couche de la pluralité de couches dont le nombre total de bits est supérieur ou égal au nombre prédéfini comme étant une couche d'une pluralité de secondes couches de façon à classer la pluralité de couches ;
l'obtention (S130, 5240, S360), au moyen du processeur graphique, d'une couche intermédiaire en composant la pluralité de premières couches ; et
l'obtention (S140, 5250, 5370), au moyen du processeur d'affichage multimédia, de l'interface d'affichage en composant la pluralité de secondes couches et la couche intermédiaire ;
dans lequel, avant l'acquisition (S110, 5210, S340) du nombre total de bits dans chaque couche de la pluralité de couches de l'interface d'affichage, le procédé comprend en outre :
l'acquisition (S310) d'une résolution de chaque couche de la pluralité de couches ;
la détermination (S320) si la résolution de chaque couche de la pluralité de couches s'adapte à une résolution d'écran ; et
l'ajustement (S330) d'une résolution qui ne s'est pas adaptée à la résolution d'écran, de façon à l'adapter à la résolution d'écran,
dans lequel le procédé comprend en outre :
la détermination d'un changement de la résolution d'écran ;
en réponse à une détection d'un changement de la résolution d'écran, l'acquisition de chaque couche de la pluralité de couches présentant un contenu d'affichage inchangé sur un écran au titre d'une des couches fixes pour l'affichage ; et
l'ajustement de la résolution de chacune des couches fixes de façon à l'adapter à la résolution d'écran,
dans lequel le procédé comprend en outre :
l'ajustement dynamique (S220) du nombre prédéfini ;
dans lequel l'ajustement dynamique (S220) du nombre prédéfini comprend :
la détermination si l'écran est dans un état d'affichage ;
lorsque l'écran est dans l'état d'affichage, la détermination, à intervalles prédéfinis, d'une valeur moyenne des nombres de bits de toutes les couches configurées pour l'interface d'affichage pendant une plage de temps prédéfinie avant le temps actuel ; et
la définition de la valeur moyenne comme le nombre prédéfini ;
ou
dans lequel l'ajustement dynamique (S220) du nombre prédéfini comprend :
l'enregistrement d'un nombre de couches de la pluralité de premières couches et d'un nombre de couches de la pluralité de secondes couches, dans chaque interface d'affichage ;
la détermination si une pluralité prédéfinie d'interfaces continues satisfont toutes un cas dans lequel le nombre de couches de la pluralité de premières couches est supérieur au nombre de couches de la pluralité de secondes couches selon une différence prédéfinie ; et
lorsque la pluralité prédéfinie d'interfaces continues satisfont toutes le cas dans lequel le nombre de couches de la pluralité de premières couches est supérieur au nombre de couches de la pluralité de secondes couches selon la différence prédéfinie, la diminution d'une valeur du nombre prédéfini.

2. Procédé selon la revendication 1, dans lequel le procédé comprend en outre : lorsque la pluralité prédéfinie d'interfaces continues ne satisfont pas toutes le cas dans lequel le nombre de couches de la pluralité de premières couches est supérieur au nombre de couches de la pluralité de secondes couches selon la différence prédéfinie, la détermination si chaque interface de la pluralité prédéfinie d'interfaces continues satisfait un cas dans lequel le nombre de couches de la pluralité de secondes couches est supérieur au nombre de couches de la pluralité de premières couches selon la différence prédéfinie ; et
lorsque la pluralité prédéfinie d'interfaces continues satisfont toutes le cas dans lequel le nombre de couches de la pluralité de secondes couches est supérieur au nombre de couches de la pluralité de premières couches selon la différence prédéfinie, l'augmentation de la valeur du nombre prédéfini.

3. Procédé selon la revendication 2, dans lequel le procédé comprend en outre :
lorsque la pluralité prédéfinie d'interfaces continues ne satisfont pas toutes le cas dans lequel le nombre de couches de la pluralité de secondes couches est supérieur au nombre de couches de la pluralité de premières couches selon la différence prédéfinie, et lorsque la pluralité prédéfinie d'interfaces continues ne satisfont pas toutes le cas dans lequel le nombre de couches de la pluralité de premières couches est supérieur au nombre de couches de la pluralité de secondes couches selon la différence prédéfinie, le maintien de la valeur du nombre prédéfini inchangée.

4. Procédé selon l'une quelconque des revendications 1 à 3, dans lequel, lorsque le nombre de couches de la pluralité de secondes couches est supérieur à une capacité de composition du processeur d'affichage multimédia, augmenter graduellement la valeur du nombre prédéfini jusqu'à ce que le nombre de couches de la pluralité de secondes couches soit inférieur à la capacité de composition du processeur d'affichage multimédia lorsque la pluralité de couches est classée en fonction du nombre prédéfini.

5. Procédé selon l'une quelconque des revendications 1 à 4, dans lequel l'acquisition (S110, S210, S340) du nombre total de bits dans chaque couche de la pluralité de couches de l'interface d'affichage comprend :
la lecture d'un nombre de pixels de chaque couche de la pluralité de couches ; et
en fonction d'un nombre de bits occupés par chaque pixel, le calcul du nombre total de bits dans chaque couche de la pluralité de couches en multipliant le nombre de pixels par le nombre de bits occupés par chaque pixel.

6. Procédé selon l'une quelconque des revendications 1 à 5, dans lequel l'acquisition (S110, S210, S340) du nombre total de bits dans chaque couche de la pluralité de couches de l'interface d'affichage comprend :
l'acquisition d'une somme d'un nombre de bits de divers éléments dans chaque couche au titre du nombre de bits de la couche, dans lequel chacun des éléments dans la couche est constitué de données qui sont configurées pour un affichage et doivent occuper un espace de stockage.

7. Procédé selon l'une quelconque des revendications 1 à 6, dans lequel le procédé comprend en outre :
le stockage de la couche intermédiaire dans un tampon de trames ;
dans lequel l'obtention (S140, 5250, 5370), au moyen du processeur d'affichage multimédia, de l'interface d'affichage en composant la pluralité de secondes couches et la couche intermédiaire comprend :
la composition, au moyen du processeur d'affichage multimédia, de la pluralité de secondes couches en une couche planifiée pour une composition ; et
la lecture de la couche intermédiaire dans le tampon de trames, et la composition de la couche intermédiaire et de la couche planifiée pour une composition dans l'interface d'affichage, au moyen du processeur d'affichage multimédia ;
ou
dans lequel le procédé comprend en outre :
le stockage de la couche intermédiaire dans le tampon de trames ;
lors d'une mise à jour de l'interface d'affichage et lorsque toutes les couches impliquées dans la couche intermédiaire ne sont pas mises à jour, l'obtention, au moyen du processeur d'affichage multimédia, de la couche intermédiaire dans le tampon de trames ; et
l'obtention de l'interface en composant la couche intermédiaire et l'interface d'affichage mise à jour.

8. Procédé selon l'une quelconque des revendications 4 à 7, dans lequel, avant l'obtention (S130, S240, 5360), au moyen du processeur graphique, de la couche intermédiaire en composant la pluralité de premières couches, le procédé comprend en outre :
lorsque le nombre de couches de la pluralité de secondes couches est supérieur à la capacité de composition du processeur d'affichage multimédia, l'utilisation d'une couche de la pluralité de secondes couches qui a le plus petit nombre total de bits et dépasse la capacité de composition du processeur d'affichage multimédia au titre d'une couche de la pluralité de premières couches pour que le processeur graphique effectue une composition ; ou
avant l'obtention (S130, 5240, S360), au moyen du processeur graphique, de la couche intermédiaire en composant la pluralité des premières couches, le procédé comprend en outre : l'acquisition de chaque couche de l'interface d'affichage.

9. Dispositif électronique (700), dans lequel le dispositif électronique (700) comprend une mémoire (710), un premier processeur (720), un processeur graphique (730) et un processeur d'affichage multimédia (740), dans lequel la mémoire (710), le processeur graphique (730) et le processeur d'affichage multimédia (740) sont couplés au premier processeur (720), et la mémoire (710) stocke des instructions, lorsque les instructions sont exécutées par le premier processeur (720), le premier processeur (720) exécute le procédé selon l'une quelconque des revendications 1 à 8, dans lequel le processeur graphique (730) et le processeur d'affichage multimédia (740) exécutent une composition de couches selon les revendications 1 à 8.

10. Support de stockage lisible par ordinateur (800), dans lequel le support de stockage lisible par ordinateur (800) stocke un code de programme (810) permettant d'exécuter le procédé selon l'une quelconque des revendications 1 à 8 lorsqu'il est exécuté sur le dispositif électronique selon la revendication 9.
